# EUROPEAN PATENT APPLICATION

(11) **EP 2 458 772 A2**
(43) Date of publication of application: **30.05.2012**
(21) Application number: 11190422.3
(22) Date of filing: 23.11.2011
(51) Int. Cl.: H04L 7/00, H04B 3/00, H04J 3/06

(54) **Method and system for synchronizing a network using existing network cables**

(30) Priority: 30.11.2010 US 956447
(71) Applicant: GE Aviation Systems LLC, Grand Rapids, MI 49512-1991 (US)
(72) Inventor: Bobrek, Pavlo, Pinellas Park, FL 33782 (US)
(74) Representative: Williams, Andrew Richard

(57) **Abstract**

A network synchronizing system (100) is provided. The system includes a synchronizing transmitter (112) communicatively coupled to a message transmitter (134) and to a message receiver (138) of a master physical interface (PHY) device (131) of a first end system (104) of a local area network (LAN) (102), and a synchronizing receiver (118) communicatively coupled to a message transmitter (136) and to a message receiver (140) of a slave PHY device (132) of a second end system (106) of a local area network (LAN), where the synchronizing transmitter is configured to transmit a timing message to the synchronizing receiver using a first differential twisted pair connection (108) and using a second differential twisted pair connection (110) and the synchronizing transmitter is configured to transmit a synchronizing pulse to the synchronizing receiver using the first differential twisted pair connection and using the second differential twisted pair connection.

## Description

### BACKGROUND OF THE INVENTION

The field of the invention relates generally to avionics network communications, and more specifically, to a method and system for temporally synchronizing a plurality of end systems within a network of end systems.

In an ARINC 664 part 7 network, differential pairs are used to communicate messages between end systems, such as hosts and nodes, and switches through a network similar to an Ethernet Local Area Network or LAN. Guaranteeing data integrity requires synchronizing the end systems in the network to a common global time (or clock). A minimum precision on the order of microseconds is highly desirable. This provides a measure of the freshness of the data and a means to measure the transit time from source to destination.

For a variety of reasons, achieving this degree of precision is extremely difficult using packet communication alone. Out of band signaling using ancillary wires has been used in an attempt to improve precision.

Precision Time Protocol (IEEE 1588) relies on in-band communication and time stamping hardware with very little variation between the nodes. Its accuracy depends on the degree to which the delay in each direction is symmetric, on the data rate, and on delay variation (e.g., due FIFOs or commutation order). To obtain microsecond accuracy requires multiple messages maintaining many states.

### BRIEF DESCRIPTION OF THE INVENTION

In one embodiment, a network synchronizing system includes a synchronizing transmitter communicatively coupled to a message transmitter and to a message receiver of a master physical interface (PHY) device of a first end system of a local area network (LAN) and a synchronizing receiver communicatively coupled to a message transmitter and to a message receiver of a slave PHY device of a second end system of a local area network (LAN), where the synchronizing transmitter is configured to transmit a timing message to the synchronizing receiver using a first differential twisted pair connection and using a second differential twisted pair connection and the synchronizing transmitter is configured to transmit a synchronizing pulse to the synchronizing receiver using the first differential twisted pair connection and using the second differential twisted pair connection.

In another embodiment, a method of temporally synchronizing a plurality of end systems within a network of end systems includes receiving a synchronization message including a synchronizing time from a master end system by a slave end system, the synchronization message received through a first and a second twisted pair physical interface connections between the master and the slave end systems and storing the received synchronizing time. The method also includes receiving a synchronization pulse from the master end system by the slave end system, the synchronization pulse received through the first and the second twisted pair physical interface connections between the master and the slave end systems and temporally synchronizing the slave end system to the master end system using the synchronizing time and the synchronization pulse.

In yet another embodiment, a network synchronization system includes a local area network (LAN) that includes a first end system and a second end system communicatively coupled to the first end system using a first differential twisted pair connection and using a second differential twisted pair connection. The synchronization system also includes a synchronization transmitter communicatively coupled to a center-tap of at least one of the first differential twisted pair connection and the second differential twisted pair connection and a synchronization receiver communicatively coupled to a center-tap of at least one of the first differential twisted pair connection and the second differential twisted pair connection.

### BRIEF DESCRIPTION OF THE DRAWINGS

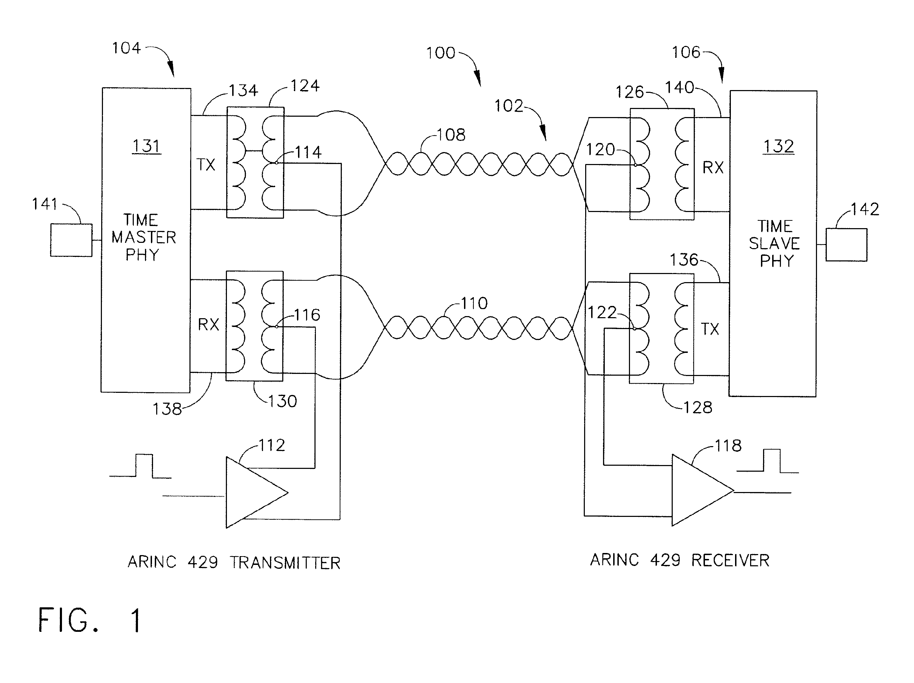

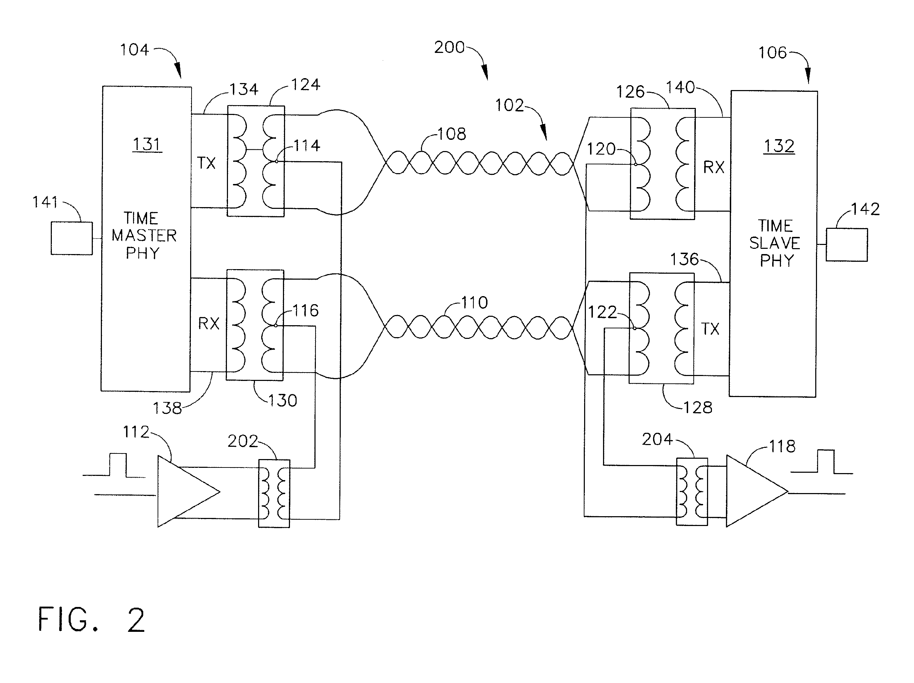

FIGS. 1 and 2 show exemplary embodiments of the method and system described herein.
FIG. 1 is a schematic block diagram of a network synchronization system in accordance with an exemplary embodiment of the present invention; and
FIG. 2 is a schematic block diagram of a network synchronization system in accordance with another exemplary embodiment of the present invention.

### DETAILED DESCRIPTION OF THE INVENTION

The following detailed description illustrates embodiments of the invention by way of example and not by way of limitation. It is contemplated that the invention has general application to analytical and methodical embodiments of network synchronization in industrial, commercial, and residential applications.

As used herein, an element or step recited in the singular and proceeded with the word "a" or "an" should be understood as not excluding plural elements or steps, unless such exclusion is explicitly recited. Furthermore, references to "one embodiment" of the present invention are not intended to be interpreted as excluding the existence of additional embodiments that also incorporate the recited features.

Embodiments of the present invention include end systems, for example, but not limited to, hosts and nodes of a network, and may also include intermediate systems, for example, but not limited to, switches and/or routers. The systems communicate with each over a network through one or more switches. In various embodiments, the network is a Avionics Full-Duplex Switched Ethernet (AFDX) that is a data network for safety-critical applications that utilizes dedicated bandwidth while providing deterministic Quality of Service (QoS). AFDX is based on IEEE 802.3 Ethernet technology and utilizes commercial off-the-shelf (COTS) components and is described specifically by Part 7 of the ARINC 664 Specification. This communication network uses two differential wire pairs, one for transmit and one for receive, transmitting and receiving at, for example, 10 Megabits per second or 100 Megabits per second (1000 Megabits per second or gigabit Ethernet over copper uses 4 pairs in full duplex mode). Coupling between the physical interfaces (PHYs) of the end system and the switch is through a transformer. If a transformer is selected which has a center-tap on the line side, then a common mode signal can be sent using the center-taps of the transformers serving the two signal pairs. Since this signal is sent as common mode, it is orthogonal to and does not interfere with the differential signal used for Ethernet communication. Additionally, in accordance with another embodiment, isolation transformers are used.

FIG. 1 is a schematic block diagram of a network synchronization system 100 in accordance with an exemplary embodiment of the present invention. In the exemplary embodiment, network synchronization system 100 is used with a local area network (LAN) 102, such as, for example, but not limited to, an Ethernet network described specifically by Part 7 of the ARINC 664 Specification. Network 102 includes a first end system 104 and a second end system 106 communicatively coupled to first end system 104 using a first differential twisted pair connection 108 and using a second differential twisted pair connection 110. Network synchronization system 100 also includes a synchronization transmitter 112 communicatively coupled to a center-tap 114 of at least one of first differential twisted pair connection 108 and a center-tap 116 second differential twisted pair connection 110. Network synchronization system 100 further includes a synchronization receiver 118 communicatively coupled to a center-tap 120 of at least one of first differential twisted pair connection 108 and a center-tap 122 of second differential twisted pair connection 110. In the exemplary embodiment, first end system 104 and a second end system 106 are communicatively coupled to first differential twisted pair connection 108 and second differential twisted pair connection 110 using respective transformers 124, 126, 128, and 130. In various embodiments, first end system 104 and a second end system 106 are communicatively coupled to first differential twisted pair connection 108 and second differential twisted pair connection 110 across respective inductors (not shown in FIG. 1). Transformers 124, 126, 128, and 130 include center-taps 114, 116, 120, and 122 on a line side winding of each transformer. When inductors are used instead of transformers 124, 126, 128, and 130, center-taps 114, 116, 120, and 122 are the center-taps of the respective inductors.

First end system 104 and a second end system 106 each include a physical interface (PHY) device 131 and 132 respectively. Each PHY device 131 and 132 includes a respective transmit section 134 and 136, and a respective receive section 138 and 140. In the exemplary embodiment, PHY device 131 is configured as a time master device and PHY device 132 is configured as a time slave device. Master PHY device 131 is configured to transmit messages to slave PHY device 132 using first differential twisted pair connection 108. Master PHY device 131 is configured to receive messages from slave PHY device 132 using second differential twisted pair connection 110. Specifically, message transmitter 134 of master physical interface (PHY) device 131 is communicatively coupled to message receiver 140 of slave PHY device 132 using first differential twisted pair connection 108 and message receiver 138 of master physical interface (PHY) device 131 is communicatively coupled to message transmitter 136 of slave PHY device 132 using second differential twisted pair connection 110.

In the exemplary embodiment, master physical interface (PHY) device 131 is transformer-coupled to first differential twisted pair connection 108 using transformer 124 and coupled to second differential twisted pair connection 110 using transformer 130. However, in some embodiments, either transformer 124 and transformer 130 or both may be replaced with an inductor and the connections between master physical interface (PHY) device 131 and first differential twisted pair connection 108 and/or second differential twisted pair connection 110 may be made across the inductor(s).

Also in the exemplary embodiment, slave physical interface (PHY) device 132 is transformer-coupled to first differential twisted pair connection 108 using transformer 126 and coupled to second differential twisted pair connection 110 using transformer 128. However, in some embodiments, either transformer 126 and transformer 128 or both may be replaced with an inductor and the connections between slave physical interface (PHY) device 131 and first differential twisted pair connection 108 and/or second differential twisted pair connection 110 may be made across the inductor(s).

In the exemplary embodiment, synchronizing transmitter 112 and/or synchronizing receiver 118 are communicatively coupled to a center-tap of respective coupling transformers 124, 126, 128, and 130.

During operation, network 102 provides a communication link between first end system 104 and second end system 106. Additionally, there may be a plurality of other end systems (not shown) that can communicate with first end system 104 and second end system 106 using network 102. Each of first end system 104 and second end system 106 may include respective processors 141 and 142, which may be configured to control the operation of first end system 104 and second end system 106. When synchronizing first end system 104 and second end system 106, synchronizing transmitter 112 is programmed to generate and transmit through network 102 a timing message. In another embodiment, the timing message may be generated by, for example, but not limited to, any host, node, router, or switch operating on network 102. The end systems being synchronized store the timing message and wait for a synchronization pulse. Synchronizing transmitter 112 is programmed to generate and transmit through network 102 the synchronization pulse. When received by the end systems, the synchronization pulse triggers the end systems to update their clock or to generate an offset that is applied to their timing process such that all end systems receiving the timing message and the synchronization pulse are then synchronized to a sub-microsecond tolerance. Network synchronization system 100 permits sub-microsecond synchronization without adding additional wiring by using a common mode pulse transmitted over existing network 102 without affecting data transfer over network 102. In another embodiment, the timing message may be transmitted to all end systems after the synchronization pulse is transmitted.

FIG. 2 is a schematic block diagram of a network synchronization system 200 in accordance with another embodiment of the present invention. Network synchronization system 200 is substantially similar to network synchronization system 100, (shown in FIG. 1) and components of network synchronization system 200 that are identical to components of network synchronization system 100 are identified in FIG. 2 using the same reference numerals used in FIG. 1. In the exemplary embodiment, synchronizing transmitter 112 and/or synchronizing receiver 118 are communicatively coupled to a center-tap of respective coupling transformers 124, 126, 128, and 130 using transformers 202 and 204.

The term processor, as used herein, refers to central processing units, microprocessors, microcontrollers, reduced instruction set circuits (RISC), application specific integrated circuits (ASIC), logic circuits, and any other circuit or processor capable of executing the functions described herein.

As used herein, the terms "software" and "firmware" are interchangeable, and include any computer program stored in memory for execution by processors 141 and 142, including RAM memory, ROM memory, EPROM memory, EEPROM memory, and non-volatile RAM (NVRAM) memory. The above memory types are exemplary only, and are thus not limiting as to the types of memory usable for storage of a computer program.

As will be appreciated based on the foregoing specification, the above-described embodiments of the disclosure may be implemented using computer programming or engineering techniques including computer software, firmware, hardware or any combination or subset thereof, wherein the technical effect is for providing sub-microsecond synchronization to a network without introducing additional copper wiring. Any such resulting program, having computer-readable code means, may be embodied or provided within one or more computer-readable media, thereby making a computer program product, i.e., an article of manufacture, according to the discussed embodiments of the disclosure. The computer-readable media may be, for example, but is not limited to, a fixed (hard) drive, diskette, optical disk, magnetic tape, semiconductor memory such as read-only memory (ROM), and/or any transmitting/receiving medium such as the Internet or other communication network or link. The article of manufacture containing the computer code may be made and/or used by executing the code directly from one medium, by copying the code from one medium to another medium, or by transmitting the code over a network.

The above-described embodiments of a method and system of temporally synchronizing a plurality of end systems within a network of end systems provides a cost-effective and reliable means for synchronizing a copper-based ARINC 664 part 7 network without adding additional wiring. More specifically, the methods and systems described herein facilitate reducing the number of messages needed to perform network synchronization and reducing system complexity while improving the temporal synchronization resolution. As a result, the methods and systems described herein facilitate operating an avionics network in a cost-effective and reliable manner.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the invention are indicated in the following clauses:
1. A network synchronizing system comprising:
   a synchronizing transmitter communicatively coupled to a message transmitter and to a message receiver of a master physical interface (PHY) device of a first end system of a local area network (LAN); and
   a synchronizing receiver communicatively coupled to a message transmitter and to a message receiver of a slave PHY device of a second end system of a local area network (LAN),
   where said synchronizing transmitter is configured to transmit a timing message to said synchronizing receiver using a first differential twisted pair connection and using a second differential twisted pair connection and said synchronizing transmitter is configured to transmit a synchronizing pulse to said synchronizing receiver using said first differential twisted pair connection and using said second differential twisted pair connection.
2. A system in accordance with Clause 1, wherein said message transmitter of said master PHY device is communicatively coupled to said message receiver of said slave PHY device using said first differential twisted pair connection and wherein said message transmitter of said slave PHY device is communicatively coupled to said message receiver of said master PHY device using said second differential twisted pair connection.
3. A system in accordance with Clause 1, wherein at least one of said message transmitter of said master PHY device is communicatively coupled to said first differential twisted pair connection using a coupling transformer, said message transmitter of said slave PHY device is communicatively coupled to said second differential twisted pair connection using a coupling transformer, said message receiver of said master PHY device is communicatively coupled to said second differential twisted pair connection using a coupling transformer, and said message receiver of said slave PHY device is communicatively coupled to said first differential twisted pair connection using a coupling transformer.
4. A method of temporally synchronizing a plurality of end systems within a network of end systems, said method comprising:
   receiving a synchronization message including a synchronizing time from a master end system by a slave end system, the synchronization message received through a first and a second twisted pair physical interface connections between the master and the slave end systems;
   storing the received synchronizing time;
   receiving a synchronization pulse from the master end system by the slave end system, the synchronization pulse received through the first and the second twisted pair physical interface connections between the master and the slave end systems; and
   temporally synchronizing the slave end system to the master end system using the synchronizing time and the synchronization pulse.
5. A method in accordance with Clause 4, further comprising transmitting avionics network traffic from the master end system to the slave end system through the first twisted pair physical interface connections while receiving at least one of the synchronization message and the synchronization pulse.
6. A method in accordance with Clause 4, further comprising transmitting avionics network traffic from the slave end system to the master end system through the second twisted pair physical interface connection while receiving at least one of the synchronization message and the synchronization pulse.
7. A method in accordance with Clause 4, further comprising transformer coupling at least one of the first and the second twisted pair physical interface connections between the master and the slave end systems.
8. A method in accordance with Clause 7, further comprising coupling at least one of a synchronizing transmitter and a synchronizing receiver to a center-tap of a coupling transformer.
9. A method in accordance with Clause 4, further comprising transformer coupling at least one of a synchronizing transmitter and a synchronizing receiver to a center-tap of a coupling transformer.
10. A method in accordance with Clause 4, wherein temporally synchronizing the slave end system to the master end system comprises generating a temporal offset between a time of receipt of the synchronizing time and receipt of the synchronization pulse.
11. A method in accordance with Clause 10, further comprising adjusting a clock of the slave end system using the generated offset.
12. A method in accordance with Clause 4, wherein temporally synchronizing the slave end system to the master end system comprises adjusting a clock of the slave end system using the synchronizing time after receipt of the synchronization pulse.
13. A network synchronization system comprising:
   a local area network (LAN) comprising:
      a first end system; and
      a second end system communicatively coupled to said first end system using a first differential twisted pair connection and using a second differential twisted pair connection;
      a synchronization transmitter communicatively coupled to a center-tap of at least one of said first differential twisted pair connection and said second differential twisted pair connection; and
      a synchronization receiver communicatively coupled to a center-tap of at least one of said first differential twisted pair connection and said second differential twisted pair connection.
14. A system in accordance with Clause 13, wherein a master physical interface (PHY) device is configured to transmit messages to a slave PHY device using said first differential twisted pair connection and wherein said master physical interface (PHY) device is configured to receive messages from said slave PHY device using said second differential twisted pair connection.
15. A system in accordance with Clause 14, wherein a message transmitter of said master physical interface (PHY) device is communicatively coupled to a message receiver of said slave PHY device using said first differential twisted pair connection.
16. A system in accordance with Clause 14, wherein a message receiver of said master physical interface (PHY) device is communicatively coupled to a message transmitter of said slave PHY device using said second differential twisted pair connection.
17. A system in accordance with Clause 13, wherein a master physical interface (PHY) device is transformer-coupled to at least one of said first differential twisted pair connection and said second differential twisted pair connection.
18. A system in accordance with Clause 13, wherein a slave physical interface (PHY) device is transformer coupled to at least one of said first differential twisted pair connection and said second differential twisted pair connection.
19. A system in accordance with Clause 13, wherein at least one of a synchronizing transmitter and a synchronizing receiver is communicatively coupled to a center-tap of a coupling transformer wherein said coupling transformer is communicatively coupled between a master physical interface (PHY) device of said first end system and a slave physical interface (PHY) device of said second end system.
20. A system in accordance with Clause 13, wherein at least one of a synchronizing transmitter and a synchronizing receiver is transformer coupled to a center-tap of a coupling transformer wherein said coupling transformer is communicatively coupled between a master physical interface (PHY) device of said first end system and a slave physical interface (PHY) device of said second end system.

## Claims

1. A network synchronizing system (100) comprising:
a synchronizing transmitter (112) communicatively coupled to a message transmitter (134) and to a message receiver (138) of a master physical interface (PHY) device (131) of a first end system (104) of a local area network (LAN) (102); and
a synchronizing receiver (118) communicatively coupled to a message transmitter (136) and to a message receiver (140) of a slave PHY device (132) of a second end system (106) of a local area network (LAN),
where said synchronizing transmitter is configured to transmit a timing message to said synchronizing receiver using a first differential twisted pair connection (108) and using a second differential twisted pair connection (110) and said synchronizing transmitter is configured to transmit a synchronizing pulse to said synchronizing receiver using said first differential twisted pair connection and using said second differential twisted pair connection.

2. A system (100) in accordance with Claim 1, wherein said message transmitter (134) of said master PHY device (131) is communicatively coupled to said message receiver (140) of said slave PHY device (132) using said first differential twisted pair connection (108) and wherein said message transmitter (136) of said slave PHY device is communicatively coupled to said message receiver (138) of said master PHY device using said second differential twisted pair connection (110).

3. A system (100) in accordance with Claim 1, wherein at least one of said message transmitter (134) of said master PHY device (131) is communicatively coupled to said first differential twisted pair connection (108) using a coupling transformer (124), said message transmitter (136) of said slave PHY device (132) is communicatively coupled to said second differential twisted pair connection (110) using a coupling transformer (128), said message receiver (138) of said master PHY device is communicatively coupled to said second differential twisted pair connection using a coupling transformer (130), and said message receiver (140) of said slave PHY device is communicatively coupled to said first differential twisted pair connection using a coupling transformer (126).

4. A network synchronization system (100) comprising:
a local area network (LAN) (102) comprising:
a first end system (104); and
a second end system (106) communicatively coupled to said first end system using a first differential twisted pair connection (108) and using a second differential twisted pair connection (110);
a synchronization transmitter (112) communicatively coupled to a center-tap (114, 116) of at least one of said first differential twisted pair connection and said second differential twisted pair connection; and
a synchronization receiver (118) communicatively coupled to a center-tap (120, 122) of at least one of said first differential twisted pair connection and said second differential twisted pair connection.

5. A system (100) in accordance with Claim 4, wherein a master physical interface (PHY) device (131) is configured to transmit messages to a slave PHY device (132) using said first differential twisted pair connection (108) and wherein said master physical interface (PHY) device is configured to receive messages from said slave PHY device using said second differential twisted pair connection (110).

6. A system (100) in accordance with Claim 5, wherein a message transmitter (134) of said master physical interface (PHY) device (131) is communicatively coupled to a message receiver (140) of said slave PHY device (132) using said first differential twisted pair connection (108).

7. A system (100) in accordance with Claim 5, wherein a message receiver (138) of said master physical interface (PHY) device (131) is communicatively coupled to a message transmitter (136) of said slave PHY device (132) using said second differential twisted pair connection (110).

8. A system (100) in accordance with Claim 4, wherein a master physical interface (PHY) device (131) is transformer-coupled to at least one of said first differential twisted pair connection (108) and said second differential twisted pair connection (110).

9. A system (100) in accordance with Claim 4, wherein a slave physical interface (PHY) device (132) is transformer coupled to at least one of said first differential twisted pair connection (108) and said second differential twisted pair connection (110).

10. A system (100) in accordance with Claim 4, wherein at least one of a synchronizing transmitter (112) and a synchronizing receiver (118) is communicatively coupled to a center-tap (114, 116, 120, 122) of a coupling transformer (124, 126, 128, 130) wherein said coupling transformer is communicatively coupled between a master physical interface (PHY) device (131) of said first end system (104) and a slave physical interface (PHY) device (132) of said second end system (106).

11. A method of temporally synchronizing a plurality of end systems within a network of end systems, said method comprising:
receiving a synchronization message including a synchronizing time from a master end system (104) by a slave end system (106), the synchronization message received through a first (108) and a second (110) twisted pair physical interface connections between the master and the slave end systems;
storing the received synchronizing time;
receiving a synchronization pulse from the master end system by the slave end system, the synchronization pulse received through the first and the second twisted pair physical interface connections between the master and the slave end systems; and
temporally synchronizing the slave end system to the master end system using the synchronizing time and the synchronization pulse.

12. A method in accordance with Claim 11, further comprising transmitting avionics network traffic from the master end system (104) to the slave end system (106) through the first twisted pair physical interface connections (108) while receiving at least one of the synchronization message and the synchronization pulse.

13. A method in accordance with Claim 11, further comprising transmitting avionics network traffic from the slave end system (106) to the master end system (104) through the second twisted pair physical interface connection (110) while receiving at least one of the synchronization message and the synchronization pulse.

14. A method in accordance with Claim 11, further comprising transformer coupling at least one of the first and the second twisted pair physical interface connections between the master (104) and the slave (106) end systems.

15. A method in accordance with Claim 14, further comprising coupling at least one of a synchronizing transmitter (112) and a synchronizing receiver (118) to a center-tap (114,116) of a coupling transformer (124,130).
